# EUROPEAN PATENT APPLICATION

(11) **EP 0 564 688 A1**
(43) Date of publication of application: **13.10.1993**
(21) Application number: 92106265.9
(22) Date of filing: 10.04.1992
(51) Int. Cl.: H04M 11/04

(54) **A system for receiving, storing and transmitting digital data**

(71) Applicant: Kemp, Raymond J., Wildomar, CA 92595 (US); Leighton, Susan E., Lake Elisnore, CA 92330 (US)
(72) Inventor: Hawkins, Philip D., Norco, Ca 91760 (US)
(74) Representative: Reichel, Wolfgang, Dipl.-Ing.

(57) **Abstract**

The system being used in connection with a telephone set and comprising means (9) for storing at least one preselected telephone number sequence and means for encoding (3) a telephone dialling audio signal into a multiple-bit sequence, is characterized by initializing means (2, 5) activated by a voltage drop occuring upon lifting a receiver of said telephone set or the like, means for comparing (4) each of said multiple-bit sequences corresponding to one digit of a telephone number sequence with said preselected telephone number sequences and means for providing an output signal (6) upon positive match of the dialled telephone number sequence with one of said preselected telephone number sequences, said output signal being used as an activating signal for a device (7) capable of decoding said output signal .

## Description

The invention relates to a system for receiving, storing and transmitting digital data, said system being used in connection with a telephone set and comprising means for storing at least one preselected telephone number sequence and means for encoding a telephone dialling audio signal into a multiple-bit sequence.

US-A 5,012,507 discloses a telephone activated emergency system which was designed to recognize either of two three-digit numbers by using the above-mentioned system components. Upon receiving a predetermined emergency number, a strobe light located exteriorly to a building is turned on and guides approaching emergency vehicles to the place where help is needed. The second number is used to turn off the strobe light when the situation has relaxed. For enabling quick response times the circuitry is built up in hard wire logic.

Telephone activated emergency systems turned out to be very useful in emergency situations where help should be provided in very short time spans. Such systems are based on that in many cities there is a unique telephone number for emergency assistance services. Also the system described in the document US-A 5,012,507 can only be used if a universal emergency telephone number is implemented. However, this is not always the case. This may be due to the fact that in particular in smaller urban unities emergency assistance services cannot be operated because of economical reasons, on the other hand, there may be needs to quickly access to special services as fire emergency, police, ambulance and so on.

Now, adding more predesigned numbers to be recognized by the known system would be very difficult. Because of the hard wired logic any implemented numbers are fixed and can be changed only by redesigning the board. Additional numbers require adding more gates, flip-flops and interconnection in direct proportion to the number of digits of such telephone numbers. The main disadvantage of the known system is its inflexibility which is the more grave because it may turn out that each district will require different numbers which would in turn require a specially adapted board design.

An increased flexibility may also be required if the system is assumed to activate a computer or the like.

It is the objective of the invention to be provide a system for receiving, storing and transmitting digital data which shows high flexibility and can be easily adapted to any requirements with respect to accessible emergency or other telephone numbers, to communication processes with computers or the like.

This objective is achieved by a system as described in the introductory showing the features of the characterizing part of patent claim 1. Preferred embodiments of such system are subject matter of the subclaims 2 to 4. Exemplary applications are given in claims 5 to 7.

According to the invention, initializing means activated by a voltage drop occurring upon lifting a receiver of the telephone set or the like, means for comparing each of said multiple-bit sequences corresponding to one digit of a telephone number sequence with said preselected telephone number sequences and means for providing an upon positive match of the dialled telephone number sequence with one of said preselected telephone number sequences are provided, said output signal being used as an activating signal for a device capable of decoding said output signal. Examples for such devices are computers having appropriate decoding means, so that the system according to the invention may replace a commonly used modem but without the need for digital/analog and analog/digital converting, or an emergency locator as a siren or a flash or strobe light, or even a second system or several systems according to the invention.

Depending on the storage capacity, a plurality of preselected telephone numbers can be stored and can be made available. The decision whether a preselected telephone number had been dialled or not can be made by using a suitable search algorithm.

The voltage drop is an inherent characteristics to any telephone set and can be observed whenever the receiver is lifted. Even if the dial tone generator is not working, for instance because the instrument is damaged, there will be in most cases a basic power supply of around 50 volts to the telephone set. If this power supply exists, the initializing means will be activated, independently of any exchange action via telephone.

It is preferred that said storage means is individually programmable through a telephone key board. Thus, every user is enabled to make up his own collection of telephone numbers which he thinks necessary to be used in emergency cases or the like.

A fast search can be carried out if said comparator means successively compares said multiple-bit sequences with a respective digit of said preselected telephone number sequences and records one of said preselected telephone number sequences if and only if consecutive digits match with respective consecutive multiple-bit sequences. For instance, when the first digit is dialled, it is stored in a memory and compared to the first digit of each of the preselected telephone number sequences. Where a match is found, it is recorded. When the second digit is dialled, the process is repeated and carried out upon the previously recorded telephone number sequences. This means that the number of checking steps is reduced considerably compared to the previous one.

A further preferred embodiment consists in that an input means is provided receiving signals from a telephone line and attenuating them by a predetermined multiplier. Said input means will receive a plurality of signals, primarily those from the user's telephone, but also signals which may interfere with the touch tones on basis of which the decision with respect to the emergency number is made. A suitable attenuation reduces all signals except the dominant touch tone below the detection level of the touch tone decoder. An attenuation multiplier of 1/100 has been turned out to be suitable.

Preferentially, a test signal detecting means should be provided to verify whether or not the system is operating properly. As a test signal, an appropriate signal inherent to the system may be chosen, for instance the magnitude of the voltage drop or the like.

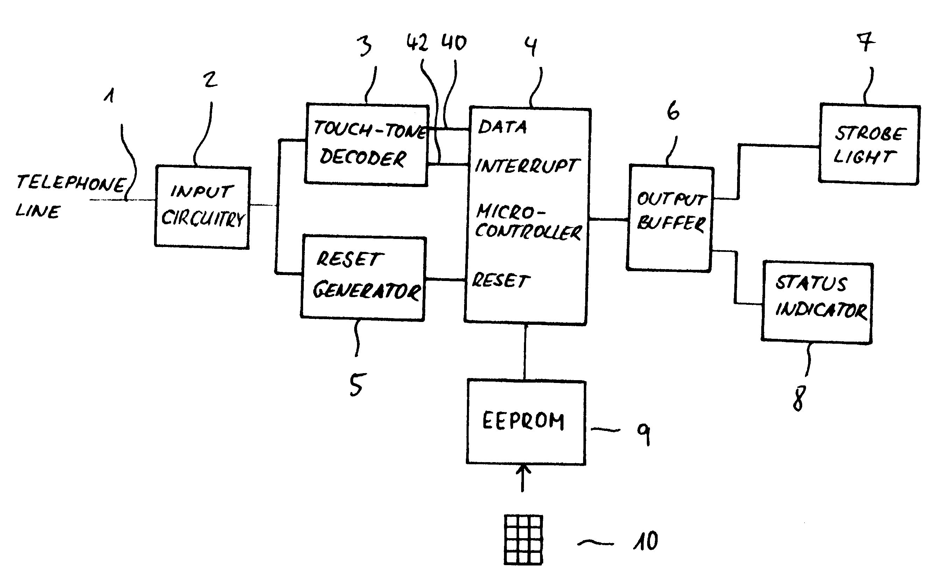

The invention will now be described in detail with respect to the attached drawing showing a block diagram which illustrates an example for the system according to the invention.

An input circuitry 2 which is designed as a network able to perform a voltage level recognition routine and thus as well acting, together with a reset generator 5, as a part of an initialization means receives signals from a telephone line 1 and transmits the change of a telephone line voltage from 48 volts (or approximately 50 volts) to 5 volts to the reset generator 5 which in turn generates a reset signal for a microcontroller 4. The signals from said telephone line 1 are attenuated by approximately 100 times. This prevents cross talk from other telephones from activating a touch tone decoder 3. The telephone signals arriving at the input circuitry 2 are passed to the touch tone decoder 3 which converts these signals into a digital code, for instance consisting of four bits, which can be further processed in the microcontroller 4. A data input 40 is provided at the microcontroller for receiving digital codes sequentially as the telephone number is dialled. The touch tone decoder 3 further sends an interrupt signal to a further input 42 of the microcontroller 4 indicating that a complete telephone number has been received.

The microcontroller 4 starts to work only upon receiving a reset signal from the reset generator 5. Before such reset signal is received, the microcontroller 4 is in a low power "wait" mode. Upon receiving a reset signal, the microcontroller 4 is brought up and starts an initialization routine. Such routine consists in setting up I/O ports for enabling the microcontroller 4 to receive information, in setting up various internal registers and in clearing an internal memory. Next the microcontroller 4 reads the I/O ports to determine if a access digits are required and if additional emergency numbers are required. These requirements, or absence of them, are stored in the internal memory. If additional numbers are required they may be received from an EEPROM 9 which had been previously programmed through a telephone keyboard 10. The microcontroller 4 is now prepared to receive the first digit of a dialled telephone number. When the first digit is dialled and processed by the touch tone decoder 3 the microcontroller 4 receives the coded first digit and stores it in its internal memory. Thereafter the coded first digit is compared to the first digit of each of the preselected telephone number sequences. Where a match is found, the respective preselected telephone number sequence is recorded in an acccumalator for that number. When the second digit is received, again in coded form, the process is repeated and causes a subselection of the preselected telephone number sequences already recorded in the accumulator. As the last digit is compared with each of the remaining recorded telephone number sequences the accumulator for that number is examined to determine if all the digits in that number match the dialled number. If the examination yields a positive result the microcontroller 4 sends a signal to an output buffer 6 to turn a strobe light 7 on or to give another suitable alarm. A special sequence is used to turn the strobe light 7 off if it is no longer needed. The output buffer 6 is not only used to drive the strobe light 7 but also to give information to a status indicator 8. The status indicator 8 gives information on whether or not the input power is on, the strobe light is operating, a test routine is carried out or the like.

A suitable power supply will be used for furnishing the power to operate the unit. For safety reasons it may contain a back up battery to provide operation in case of power failure. A low battery detector may be provided to alert the owner when the battery should be replaced.

As a further preferred use, the system can be adapted by means of feeding data into the microprocessor, to enable a descriptive message to be additionally sent to emergency service personnel, such as "need medical aide", or "police help", or "fire department" by means of touching a specific key on the telephone pad. This is of particular value to hearing and speech impaired users of the telephone emergency services which cannot at present be so delivered.

By a simple change of the circuit, the action of the system can be initiated from an incoming call, and the information fed into the microprocessor can thus be utilized to initiate an almost unlimited series of commands, thus transmitting digital information either in the form of data or commands for a variety of purposes. Equally, the system can be set to receive, store and transmit digital information, which is at present superior to standard technology which requires information to be translated into analog prior to transmission and then translated back into digital at the receiving end.

The features disclosed in the foregoing description, in the claims and/or in the accompanying drawing may, both seperately and in any combination thereof, be material for realising the invention in diverse forms thereof.

### Reference numeral list

- 1: telephone line
- 2: input circuitry
- 3: touch tone decoder
- 4: microcontroller
- 5: reset generator
- 6: output buffer
- 7: strobe light
- 8: status indicator
- 9: EEPROM
- 10: telephone key board
- 40: data input
- 42: interrupt input

## Claims

1. A system for receiving, storing and transmitting digital data, said system being used in connection with a telephone set and comprising
- means (9) for storing at least one preselected telephone number sequence and
- means (3) for encoding a telephone dialling audio signal into a multiple-bit sequence,
characterized by
- initializing means (2, 5) activated by a voltage drop occuring upon lifting a receiver of said telephone set or the like,
- means (4) for comparing each of said multiple-bit sequences corresponding to one digit of a telephone number sequence with said preselected telephone number sequences and
- means (6) for providing an output signal upon positive match of the dialled telephone number sequence with one of said preselected telephone number sequences, said output signal being used as an activating signal for a device capable of decoding said output signal .

2. The system as claimed in claim 1, characterized in that said storage means (9) is individually programmable through a telephone key board (10).

3. The system as claimed in claim 1 or 2, characterized in that said comparator means (4) successively compares said multiple-bit sequences with a respective digit of said preselected telephone number sequences and records one of said preselected telephone number sequences if and only if consecutive digits match with respective consecutive multiple-bit sequences.

4. The system as claimed in one of claims 1 to 3, characterized in that an input means (2) is provided receiving signals from a telephone line (1) attenuating them by a predetermined multiplier.

5. The system as claimed in one of the claims 1 to 4, characterized in that a test signal detecting means is provided for veryfying proper operation of the system.

6. The system as claimed in one of claims 1 to 5, characterized in that said device to be activated is an emergency locator.

7. The system as claimed in one of claims 1 to 5, characterized in that said device to be activated is a computer.

8. An arrangement of at least two systems as claimed in one of claims 1 to 5.
